(19) Europäisches Patentamt
European Patent Office
Office européen des brevets

(11) **EP 2 541 806 B1**

(12) **EUROPEAN PATENT SPECIFICATION**

(45) Date of publication and mention
of the grant of the patent:
**28.03.2018 Bulletin 2018/13**

(21) Application number: **10846503.0**

(22) Date of filing: **25.02.2010**

(51) Int Cl.:
***H04B 10/50*** *(2013.01)*

(86) International application number:
**PCT/JP2010/052948**

(87) International publication number:
**WO 2011/104838 (01.09.2011 Gazette 2011/35)**

(54) **OPTICAL TRANSMITTER**

OPTISCHER SENDER

TRANSMETTEUR OPTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**02.01.2013 Bulletin 2013/01**

(73) Proprietor: **Mitsubishi Electric Corporation**
**Tokyo 100-8310 (JP)**

(72) Inventors:
• **YOSHIDA, Tsuyoshi**
**Tokyo 100-8310 (JP)**
• **SUGIHARA, Takashi**
**Tokyo 100-8310 (JP)**

(74) Representative: **Lavoix**
**Bayerstrasse 83**
**80335 München (DE)**

(56) References cited:
**JP-A- 5 206 944          JP-A- 2003 283 432**
**JP-A- 2004 309 511          JP-A- 2007 133 176**
**US-A1- 2009 232 517**

**Description**

Technical Field

The present invention relates to an optical transmitter for converting an electric signal into an optical signal for transmission.

Background Art

In the case of using a Mach-Zehnder (MZ) optical modulator to modulate light from a light source, it is important to control a bias voltage with respect to the optical modulator. The bias voltage is known to shift from an optimum point even after optimization because of the influence of the temperature change or the secular change. When the bias voltage shifts from the optimum point, a stable optical signal cannot be transmitted. In light of this, a bias control method of automatically tracking an optimum point of the bias voltage with respect to the optical modulator has been proposed (see, for example, Patent Literatures 1 to 4 and Non Patent Literature 1).

US 2009/232517 A1 discloses a method of controlling the operating parameters of an optical modulator, without using a dither signal, is provided. Past operating parameters are compared to present operating parameters using a quality of modulation signal obtained by cross-correlating the data modulation signal used to drive the optical modulator with the modulated optical signal output from the optical modulator. The quality of modulation signal is used to optimize the operating parameters (e.g., bias point) of the optical modulator, or other operating parameters of the arrangement, such as the modulator drive level, timing alignment, etc.

Citation List

Patent Literature

    Patent Literature 1: JP 5-142504 A
    Patent Literature 2: JP 2008-92172 A
    Patent Literature 3: JP 2007-171548 A
    Patent Literature 4: JP 2008-236512 A

Non Patent Literature

Non Patent Literature 1: Yuichi Akiyama et al. "A study of bias control method for RZ-DQPSK modulator", Technical Report of IEICE, OCS2008-80, pp. 167-170, 2008.

Summary of Invention

Technical Problem

The conventional technologies, however, have the following problems.

In the bias control method disclosed in Patent Literatures 1 and 2 and Non Patent Literature 1, bias control is performed on a binary signal. In other words, this method is inapplicable to bias control intended for applications that are operated to generate an arbitrary optical waveform including an analog optical waveform, such as an orthogonal frequency division multiplexing (OFDM) signal, a multilevel modulated signal such as a 16 quadrature amplitude modulation (QAM) signal or a 64-QAM signal, or a pre-equalization signal, and change the characteristics of the optical waveform.

Hereinafter, the above-mentioned problem is described in detail with reference to the drawings.

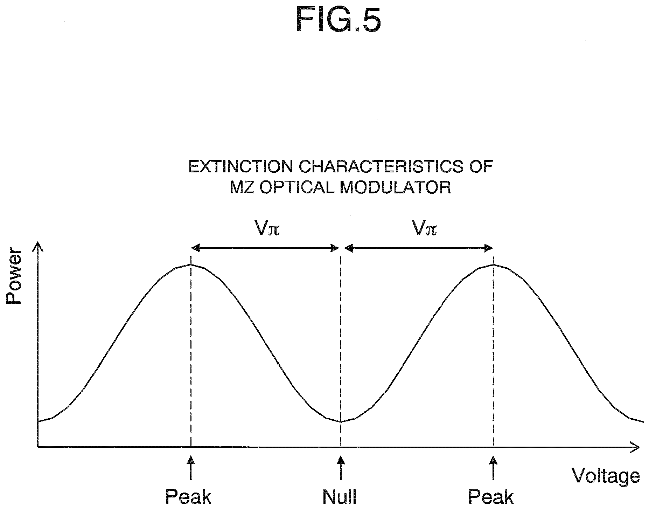

FIG. 5 is an explanatory diagram showing extinction characteristics of an MZ optical modulator. In the MZ optical modulator, when a voltage to be applied to an electrode is changed, the refractive index of a light guide path is changed and the phase of an optical signal is changed. Using the extinction characteristics, an arbitrary optical signal can be generated at an output stage of the optical modulator. Herein, the point of the application voltage at which the output light level is minimum is defined as a Null point and the point at which the output light level is maximum is defined as a Peak point.

Further, a voltage difference necessary for obtaining adjacent Null and Peak points is defined as $V\pi$. In the conventional binary-drive MZ optical modulator, for example, in order to obtain a binary phase-shift keying (BPSK) signal, the amplitude of a radio frequency (RF) signal is set to $2V\pi$ between adjacent Peak points ($2V\pi$ sweep). The ratio of the amplitude of the RF signal relative to Vn or 2Vn is referred to as modulation degree. In the case of a BPSK signal, 2Vn sweep is usually performed, and hence the ratio relative to $2V\pi$ is defined as modulation degree. Therefore, the modulation degree is 100% when the amplitude of the RF signal is 2Vn.

Specifically, the BPSK signal can be obtained by adjusting the bias so as to sweep the signal by Vn to both sides of the Null point shown in FIG. 5. This operation is referred to as "control of the bias to the Null point".

Note that, in many modulation methods other than an intensity modulation method, the bias needs to be controlled to the Null point. The invention of this application assumes that the bias is controlled to the Null point.

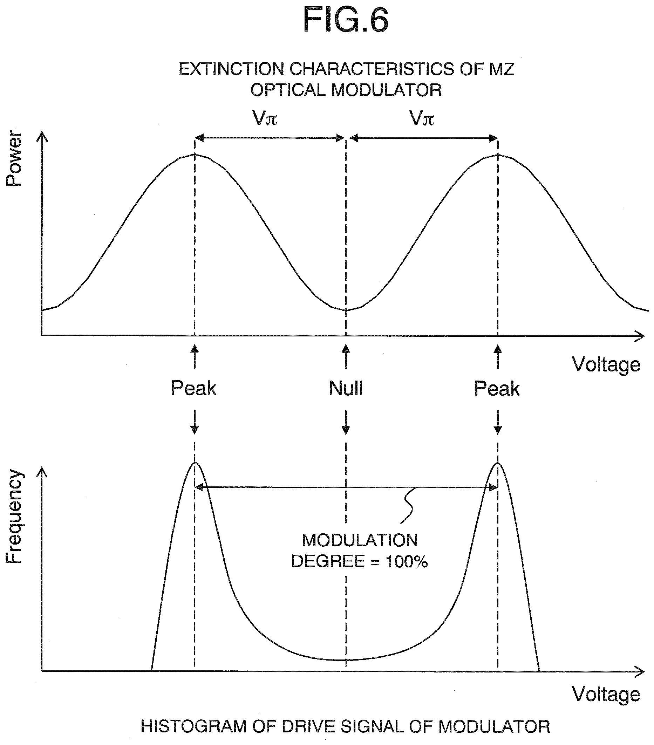

FIG. 6 is an explanatory diagram showing a histogram of a drive signal of the modulator in the case of generating a BPSK signal, together with the extinction characteristics of the MZ optical modulator shown in FIG. 5. It is understood from FIG. 6 that, when the bias is controlled to the Null point, most signal components are present at the Peak points.

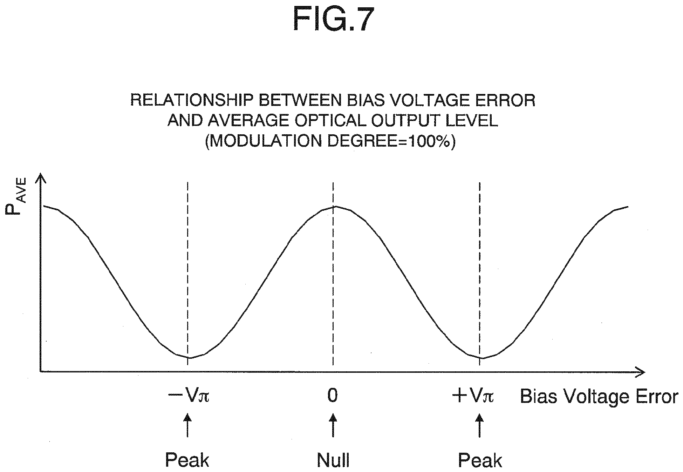

Subsequently, FIG. 7 shows the relationship between a bias voltage error and an average optical output level $P_{AVE}$ in the case where the modulation degree is 100%. It is understood from FIG. 7 that the average optical output level $P_{AVE}$ is maximum when the bias is set to the Null point and the average optical output level $P_{AVE}$ is minimum when the bias is set to the Peak point.

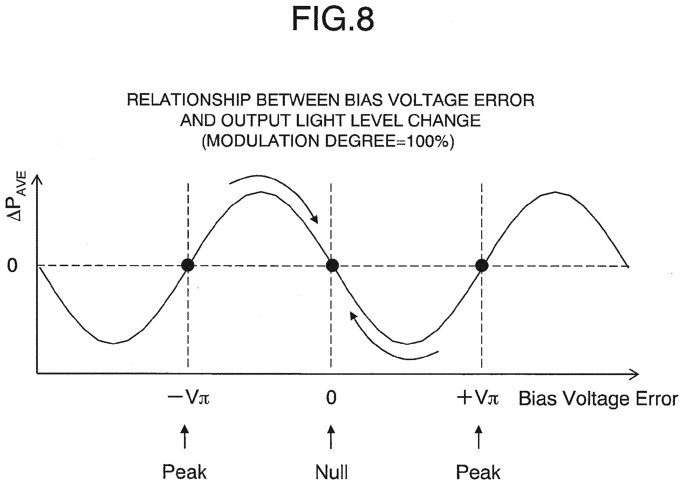

In order to perform bias control, for example, it is necessary to superimpose a minute known dither signal on a bias signal and monitor the change in level of light output from the optical modulator. In this case, as shown in FIG. 8, an output light level change $\Delta P_{AVE}$ is represented in the form of differentiating the horizontal axis of FIG. 7. In FIG. 8, when the output light level change $\Delta P_{AVE}$ is set as an error signal and the bias voltage is changed so that $\Delta P_{AVE}$ becomes 0, the bias converges to any one of the Peak point and the Null point.

In this case, the Peak point and the Null point have different inclined polarities from each other at which the output light level change $\Delta P_{AVE}$ crosses zero, and hence the bias can be caused to converge to the Null point through appropriate correspondence between the output light level change $\Delta P_{AVE}$ and the bias control direction.

For example, in FIG. 8, the bias converges to the Null point through the control of the bias in the direction of increasing the bias voltage in the case of $\Delta P_{AVE} > 0$ and through the control of the bias in the direction of decreasing the bias voltage in the case of $\Delta P_{AVE} < 0$.

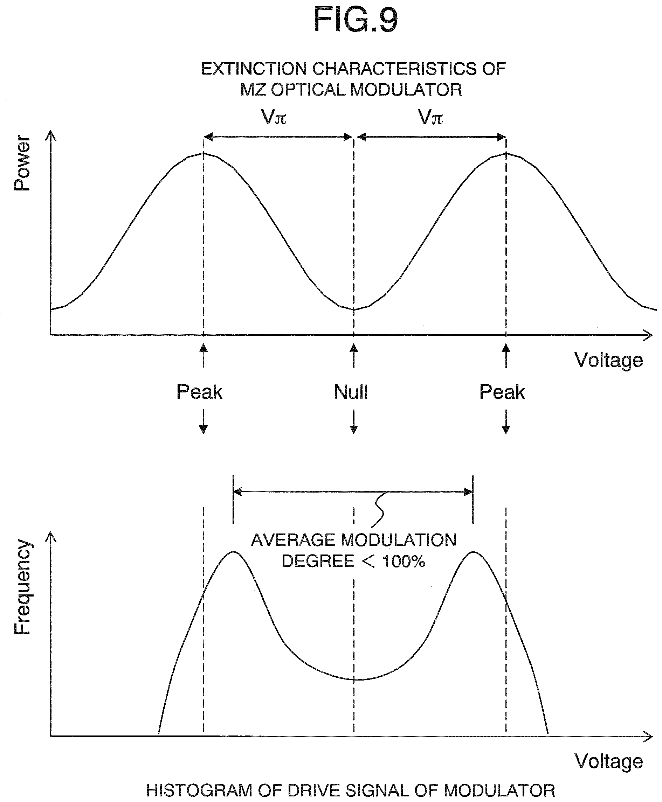

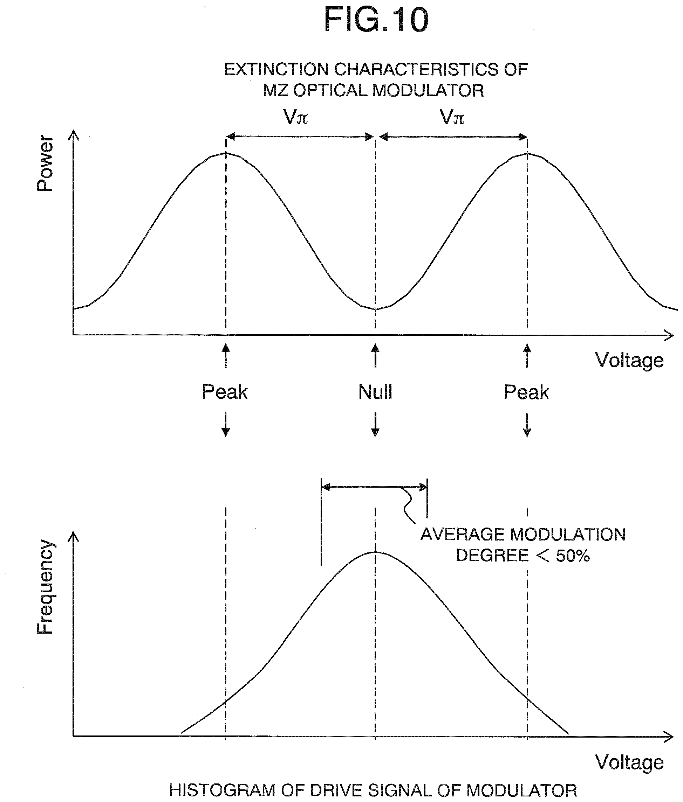

On the other hand, in the case of driving the MZ optical modulator by the above-mentioned analog waveform (OFDM signal, multilevel modulated signal, pre-equalization signal), the histogram of the drive signal of the modulator shown in FIG. 6 changes to that shown in FIG. 9 or 10. In this case, even when the amplitude of the RF signal between adjacent Peak points is 2Vn similarly to FIG. 6, the modulation degree appears to be decreased on average.

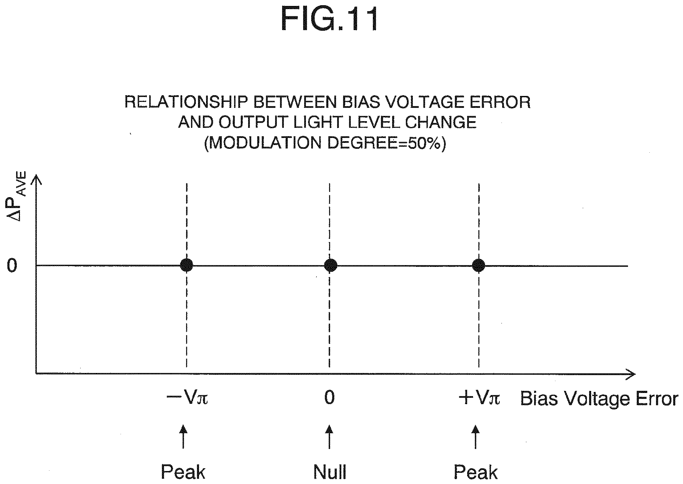

In the case where such average modulation degree is 50%, the relationship between the bias voltage error and the output light level change $\Delta P_{AVE}$ shown in FIG. 8 changes to that shown in FIG. 11. Specifically, even when the bias is changed, the average optical output level $P_{AVE}$ is not changed, and hence the bias control cannot be performed by the method of superimposing a dither signal on the bias signal.

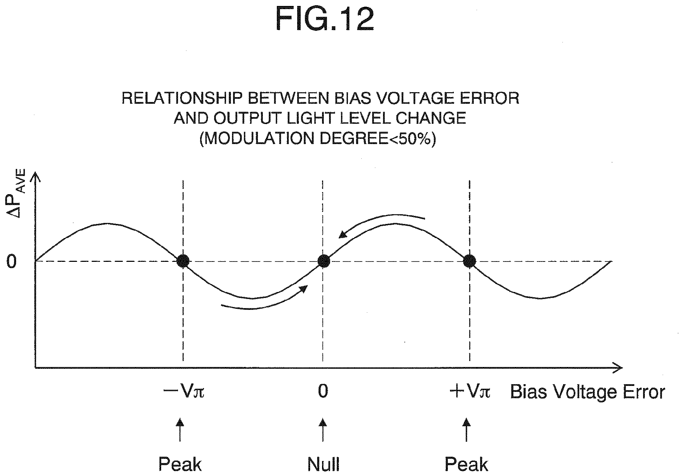

On the other hand, in the case where the average modulation degree is less than 50%, the relationship between the bias voltage error and the output light level change $\Delta P_{AVE}$ shown in FIG. 8 changes to that shown in FIG. 12. Specifically, the polarities are inverted as compared with the characteristics shown in FIG. 8. Control sensitivity is maximum at the average modulation degrees of 0% and 100% and minimum at the average modulation degree of 50%.

As described above, in the case of generating an arbitrary optical waveform including an analog optical waveform (in the case of analog optical waveform generation), for example, in an application that tracks an equalization amount of a pre-equalization signal, if the histogram thereof changes, even after the bias is controlled to the Null point, there is a risk that the bias is controlled toward the Peak point or a fear that the bias becomes unstable because of insufficient control sensitivity. If the bias converges to the Peak point or if the bias becomes unstable, there is a fear that the optical waveform of output light greatly deviates from a desired optical waveform to cause disconnection.

In the bias control method disclosed in Patent Literature 3, measures are taken against the change in convergent point depending on the above-mentioned modulation degree. A target signal is, however, a carrier-suppressed return-to-zero (CSRZ) signal. Thus, there is a problem that this method is inapplicable to bias control intended for applications that are operated to generate an arbitrary optical waveform including an analog optical waveform, such as an OFDM signal, a multilevel modulated signal, or a pre-equalization signal, and change the characteristics of the optical waveform.

In the bias control method disclosed in Patent Literature 4, the convergent point of bias control on generation of an analog optical waveform, such as an OFDM signal, a multilevel modulated signal, or a pre-equalization signal, is corrected to take measures against the change in convergent point depending on the above-mentioned average modulation degree. This is intended for solving the problem on an intensity modulated signal having a bias optimum point at the middle between the Null point and the Peak point, and is not intended for solving the problem on the control of the bias to the Null point.

The present invention has been made for solving the above-mentioned problems, and it is an object thereof to obtain an optical transmitter for generating an arbitrary optical waveform including an analog optical waveform such as an OFDM signal, a multilevel modulated signal, and a pre-equalization signal, which is capable of controlling a bias to a Null point easily and is therefore intended for an application that changes a drive waveform of the optical modulator dynamically.

Solution to Problem

According to the present invention, there is provided an optical transmitter according to claim 1.

Advantageous Effects of Invention

According to the optical transmitter of the present invention, in the optical transmitter for generating an arbitrary optical waveform, the bias control means for performing bias control on the optical modulator performs the bias control on the optical modulator based on the intensity of output light of the optical modulator detected by the light intensity detection means and the average modulation degree of the data sequence calculated by the average modulation degree calculation means.

Therefore, it is possible to obtain an optical transmitter for generating an arbitrary optical waveform including an analog optical waveform such as an OFDM signal, a multilevel signal, and a pre-equalization signal, which is capable of controlling the bias to the Null point easily and is therefore intended for an application that changes the drive waveform of the optical modulator dynamically.

Brief Description of Drawings

[FIG. 1] A block diagram illustrating an optical transmitter according to a first embodiment of the present invention.
[FIG. 2] A sequence chart illustrating processing of generating an arbitrary optical waveform in the optical transmitter according to the first embodiment of the present invention.
[FIG. 3] A block diagram illustrating an optical transmitter according to a second embodiment of the present invention.
[FIG. 4] A sequence chart illustrating processing of generating an arbitrary optical waveform in the optical transmitter according to the second embodiment of the present invention.
[FIG. 5] An explanatory diagram showing extinction characteristics of an MZ optical modulator.
[FIG. 6] An explanatory diagram showing a histogram of a drive signal of the modulator in the case of generating a BPSK signal, together with the extinction characteristics of the MZ optical modulator shown in FIG. 5.
[FIG. 7] An explanatory diagram showing the relationship between a bias voltage error and an average optical output level in the case where the modulation degree is 100%.
[FIG. 8] An explanatory diagram showing the relationship between the bias voltage error and an output light level change in the case where the modulation degree is 100%.
[FIG. 9] An explanatory diagram showing a histogram of a drive signal of the modulator in the case of driving the MZ optical modulator by an analog optical waveform, together with extinction characteristics of the MZ optical modulator.
[FIG. 10] An explanatory diagram showing another histogram of the drive signal of the modulator in the case of driving the MZ optical modulator by an analog optical waveform, together with the extinction characteristics of the MZ optical modulator.
[FIG. 11] An explanatory diagram showing the relationship between the bias voltage error and the output light level change in the case where the modulation degree is 50%.
[FIG. 12] An explanatory diagram showing the relationship between the bias voltage error and the output light level change in the case where the modulation degree is less than 50%.

Description of Embodiments

Hereinafter, an optical transmitter according to exemplary embodiments of the present invention is described with reference to the drawings . In the drawings, the same or equivalent parts are denoted by the same reference symbols.

First Embodiment

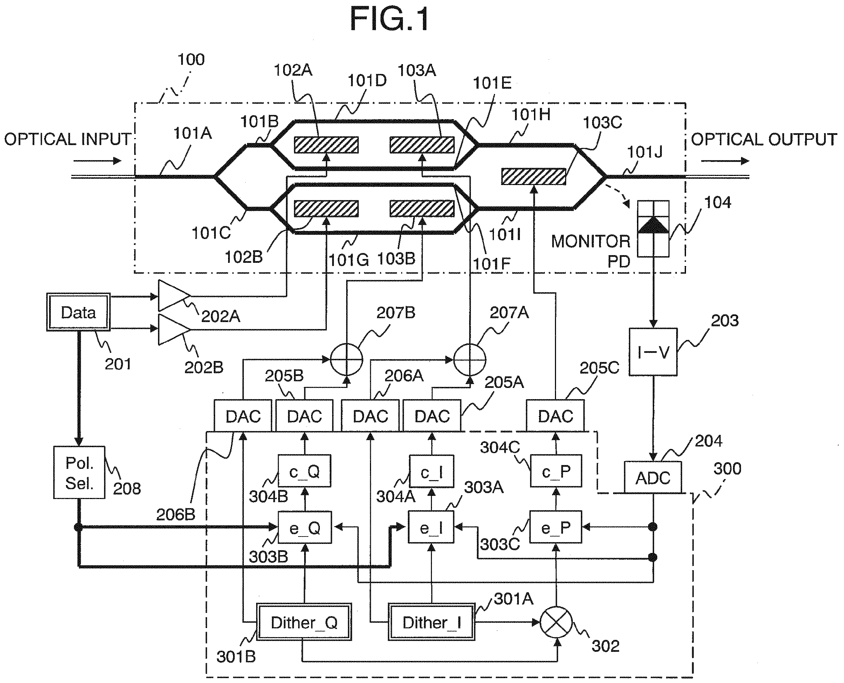

FIG. 1 is a block diagram illustrating an optical transmitter according to a first embodiment of the present invention.

Referring to FIG. 1, the optical transmitter includes an MZ optical modulator 100, a data signal generation unit (data signal generation means) 201, an in-phase channel (I-ch) modulator driver 202A, a quadrature-phase channel (Q-ch) modulator driver 202B, a current-to-voltage conversion unit 203, an analog-to-digital converter (ADC) 204, an I-ch DC digital-to-analog converter (DAC) 205A, a Q-ch DC DAC 205B, a phase DC DAC 205C, an I-ch dither DAC 206A, a Q-ch dither DAC 206B, an I-ch DC dither adder 207A, a Q-ch DC dither adder 207B, an error signal polarity selection unit 208 (average modulation degree calculation means), and a bias controller 300.

The MZ optical modulator 100 includes light guide paths 101A to 101J, an I-ch data modulation electrode 102A, a Q-ch data modulation electrode 102B, an I-ch bias electrode 103A, a Q-ch bias electrode 103B, a phase bias electrode 103C, and a monitor photodetector (PD) (light intensity detection means) 104.

The bias controller 300 includes an I-ch dither signal generation unit 301A, a Q-ch dither signal generation unit 301B, a dither signal multiplication unit 302, an I-ch error signal generation unit 303A, a Q-ch error signal generation unit 303B, a phase error signal generation unit 303C, an I-ch control signal generation unit 304A, a Q-ch control signal generation unit 304B, and a phase control signal generation unit 304C.

Hereinafter, the functions of the respective units of the optical transmitter are described.

The data signal generation unit 201 generates a data signal indicating an arbitrary data sequence, in the form of an electric signal. Note that, the data signal to be generated is not limited to a binary signal, and may be an analog electric waveform such as an OFDM signal, a multilevel modulated signal, and a pre-equalization signal.

The data signal generation unit 201 outputs an I-ch component of the generated data signal to the I-ch modulator driver 202A and a Q-ch component thereof to the Q-ch modulator driver 202B, and outputs information on the generated data signal to the error signal polarity selection unit 208.

The I-ch modulator driver 202A amplifies the I-ch data signal from the data signal generation unit 201 to a voltage high enough for driving the modulator, and outputs the amplified I-ch data signal to the I-ch data modulation electrode 102A.

The Q-ch modulator driver 202B amplifies the Q-ch data signal from the data signal generation unit 201 to a voltage high enough for driving the modulator, and outputs the amplified Q-ch data signal to the Q-ch data modulation electrode 102B.

First, the error signal polarity selection unit 208 roughly recognizes an average modulation degree of the data signal based on the information on the data signal from the data signal generation unit 201. The error signal polarity selection unit 208 then generates, in accordance with the recognized average modulation degree, a polarity selection signal for selecting whether or not to invert the polarity of an error signal for bias control, and outputs the polarity selection signal to the I-ch error signal generation unit 303A and the Q-ch error signal generation unit 303B.

Specifically, in the case where the data signal has a low peak-to-average power ratio (PAPR) and an average modulation degree of 50% or more, the error signal polarity selection unit 208 outputs the polarity selection signal specifying not to invert the polarity so that the bias may converge to the Null point normally .

On the other hand, in the case where the data signal has a high PAPR and an average modulation degree of less than 50%, the error signal polarity selection unit 208 outputs the polarity selection signal specifying to invert the polarity so that the bias may converge to the Null point normally.

Note that, the non-inverted polarity is the polarity with which the bias converges to the Null point when the average modulation degree is 100%, and the inverted polarity is the polarity with which the bias converges to the Peak point when the average modulation degree is 100%.

In this case, the error signal polarity selection unit 208 changes the polarity of the error signal for bias control in accordance with the average modulation degree. It is actually conceivable to provide a table, for example, instead of recognizing the average modulation degrees sequentially.

For example, in the case of bias control on apre-equalization signal, the relationship between the pre-equalization amount and the average modulation degree is a monotonic function, and hence it is conceivable to output a polarity selection signal specifying not to invert the polarity when the pre-equalization amount is larger than a threshold value corresponding to a given pre-equalization amount and to output a polarity selection signal specifying to invert the polarity when the pre-equalization amount is smaller than the threshold value.

The current-to-voltage conversion unit 203 converts a detection current from the monitor PD 104, which outputs the detection current corresponding to the intensity of light, into a voltage. The current-to-voltage conversion unit 203 then performs DC component removal and amplification processing on the voltage, and outputs the resultant voltage to the ADC 204.

The ADC 204 converts the voltage signal from the current-to-voltage conversion unit 203 from an analog signal to a digital signal, and outputs the resultant digital signal to the I-ch error signal generation unit 303A, the Q-ch error signal generation unit 303B, and the phase error signal generation unit 303C.

The I-ch dither signal generation unit 301A generates a periodic signal (I-ch dither signal) whose polarity becomes positive and negative alternately, and outputs the I-ch dither signal to the dither signal multiplication unit 302, the I-ch error signal generation unit 303A, and the I-ch dither DAC 206A.

The Q-ch dither signal generation unit 301B generates a periodic signal (Q-ch dither signal) whose polarity becomes positive and negative alternately, and outputs the Q-ch dither signal to the dither signal multiplication unit 302, the Q-ch error signal generation unit 303B, and the Q-ch dither DAC 206B.

In this case, for example, if the dither frequency of the I-ch dither signal is set to be twice (integral multiple of) the dither frequency of the Q-ch dither signal, a phase error signal to be described below can be generated easily.

The dither signal multiplication unit 302 calculates exclusive AND between the I-ch dither signal from the I-ch dither signal generation unit 301A and the Q-ch dither signal from the Q-ch dither signal generation unit 301B, and outputs the result of calculation to the phase error signal generation unit 303C.

The I-ch error signal generation unit 303A calculates the product of the digital voltage signal from the ADC 204 and the I-ch dither signal from the I-ch dither signal generation unit 301A, and generates an I-ch error signal e_I expressed by Expression (1) below.

$$e\_I \propto I(p,0) - I(n,0) \ \ \ldots \ (1)$$

In Expression (1), I(a, b) represents a current output from the monitor PD 104, a represents the I-ch dither, b represents the Q-ch dither, p represents that the dither is on the positive polarity side, n represents that the dither is on the negative polarity side, and 0 represents that no dither is superimposed.

When the polarity selection signal from the error signal polarity selection unit 208 specifies the non-inversion, the I-ch error signal generation unit 303A outputs the I-ch error signal e_I directly to the I-ch control signal generation unit 304A. On the other hand, when the polarity selection signal from the error signal polarity selection unit 208 specifies the inversion, the I-ch error signal generation unit 303A inverts the polarity of the I-ch error signal e_I and outputs the I-ch error signal e_I to the I-ch control signal generation unit 304A.

The Q-ch error signal generation unit 303B calculates the product of the digital voltage signal from the ADC 204 and the Q-ch dither signal from the Q-ch dither signal generation unit 301B, and generates a Q-ch error signal e_Q expressed by Expression (2) below.

$$e\_Q \propto I(0,p) - I(0,n) \ \ \ldots \ (2)$$

When the polarity selection signal from the error signal polarity selection unit 208 specifies the non-inversion, the Q-ch error signal generation unit 303B outputs the Q-ch error signal e_Q directly to the Q-ch control signal generation unit 304B. On the other hand, when the polarity selection signal from the error signal polarity selection unit 208 specifies the inversion, the Q-ch error signal generation unit 303B inverts the polarity of the Q-ch error signal e_Q and outputs the Q-ch error signal e_Q to the Q-ch control signal generation unit 304B.

The phase error signal generation unit 303C calculates the product of the digital voltage signal from the ADC 204 and the result of calculation of exclusive AND from the dither signal multiplication unit 302, to thereby generate a phase error signal e_P expressed by Expression (3), and outputs the phase error signal e_P directly to the phase control signal generation unit 304C.

$$e\_P \propto I(p,p) - I(p,n) - \{I(n,p) - I(n,n)\} \ \ \ldots \ (3)$$

In Expression (3), when the dither frequency of the I-ch dither signal is set to an integral multiple of the dither frequency of the Q-ch dither signal as described above, I(p,p), I(p,n), I(n,p), and I(n,n) are generated at an equal probability.

The I-ch control signal generation unit 304A performs, for example, proportional-integral control based on the I-ch error signal e_I from the I-ch error signal generation unit 303A, to thereby generate an I-ch DC bias signal, and outputs the I-ch DC bias signal to the I-ch DC DAC 205A.

The Q-ch control signal generation unit 304B performs, for example, proportional-integral control based on the Q-ch error signal e_Q from the Q-ch error signal generation unit 303B, to thereby generate a Q-ch DC bias signal, and outputs the Q-ch DC bias signal to the Q-ch DC DAC 205B.

The phase control signal generation unit 304C performs, for example, proportional-integral control based on the phase error signal e_P from the phase error signal generation unit 303C, to thereby generate a phase DC bias signal, and outputs the phase DC bias signal to the phase DC DAC 205C.

The I-ch DC DAC 205A converts the I-ch DC bias signal from the I-ch control signal generation unit 304A from a digital signal to an analog signal, and outputs the resultant analog signal to the I-ch DC dither adder 207A.

The Q-ch DC DAC 205B converts the Q-ch DC bias signal from the Q-ch control signal generation unit 304B from a digital signal to an analog signal, and outputs the resultant analog signal to the Q-ch DC dither adder 207B.

The phase DC DAC 205C converts the phase DC bias signal from the phase control signal generation unit 304C from a digital signal to an analog signal, and outputs the analog phase DC bias signal to the phase bias electrode 103C as a phase bias signal.

The I-ch dither DAC 206A converts the I-ch dither signal from the I-ch dither signal generation unit 301A from a digital signal to an analog signal, and outputs the resultant analog signal to the I-ch DC dither adder 207A.

The Q-ch dither DAC 206B converts the Q-ch dither signal from the Q-ch dither signal generation unit 301B from a digital signal to an analog signal, and outputs the resultant analog signal to the Q-ch DC dither adder 207B.

The I-ch DC dither adder 207A adds the I-ch DC bias signal from the I-ch DC DAC 205A and the I-ch dither signal from the I-ch dither DAC 206A, and outputs the result of addition to the I-ch bias electrode 103A as an I-ch bias signal.

The Q-ch DC dither adder 207B adds the Q-ch DC bias signal from the Q-ch DC DAC 205B and the Q-ch dither signal from the Q-ch dither DAC 206B, and outputs the result of addition to the Q-ch bias electrode 103B as a Q-ch bias signal.

The MZ optical modulator 100 modulates light that has been input from, for example, a tunable light source (not shown) provided outside based on various electric signals input from outside, and then outputs the resultant light as an optical signal. The light that has been input from the tunable light source to the MZ optical modulator 100 is first input to the light guide path 101A.

The light guide path 101A branches into the light guide path 101B and the light guide path 101C, and the light passing through the light guide path 101A is split to the light guide path 101B and the light guide path 101C.

The light guide path 101B branches into the light guide path 101D and the light guide path 101E, and the light passing through the light guide path 101B is split to the light guide path 101D and the light guide path 101E.

The light guide path 101C branches into the light guide path 101F and the light guide path 101G, and the light passing through the light guide path 101C is split to the light guide path 101F and the light guide path 101G.

The I-ch data modulation electrode 102A modulates data of the light passing through the light guide path 101D and the light guide path 101E based on the I-ch data signal from the I-ch modulator driver 202A. The I-ch bias electrode 103A modulates the phase of the light passing through the light guide path 101D and the light guide path 101E based on the I-ch bias signal from the I-ch DC dither adder 207A.

The light subjected to the data modulation and the optical phase control in the light guide path 101D and the light subjected to the data modulation and the optical phase control in the light guide path 101E are combined to be input to the light guide path 101H.

The Q-ch data modulation electrode 102B modulates data of the light passing through the light guide path 101F and the light guide path 101G based on the Q-ch data signal from the Q-ch modulator driver 202B. The Q-ch bias electrode 103B modulates the phase of the light passing through the light guide path 101F and the light guide path 101G based on the Q-ch bias signal from the Q-ch DC dither adder 207B.

The light subjected to the data modulation and the optical phase control in the light guide path 101F and the light subjected to the data modulation and the optical phase control in the light guide path 101G are combined to be input to the light guide path 101I.

The phase bias electrode 103C modulates the phase of the light passing through the light guide path 101H and the light guide path 1011 based on the phase bias signal from the phase DC DAC 205C.

The light subjected to the optical phase control in the light guide path 101H and the light subjected to the optical phase control in the light guide path 1011 are combined to be input to the light guide path 101J and then output to the outside as an optical signal.

The monitor PD 104 detects light that leaks when the light beams are combined in the light guide path 101J, and outputs a detection current corresponding to the intensity of the leakage light.

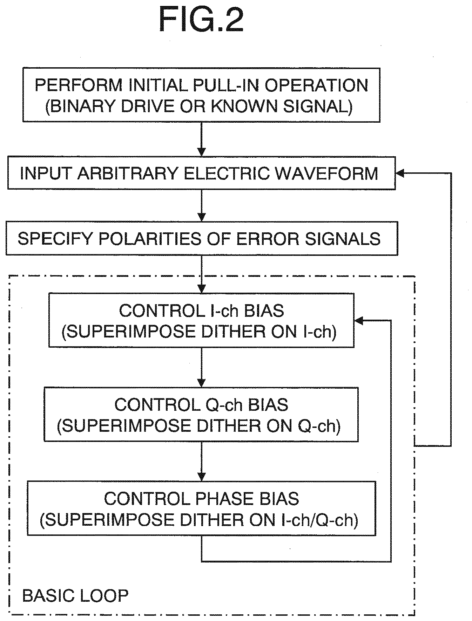

Next, referring to a sequence chart of FIG. 2, processing of generating an arbitrary optical waveform in the optical transmitter according to the first embodiment of the present invention is described.

Preliminary optimization is first performed on each of the I-ch, Q-ch, and phase bias voltages with the use of a conventional binary drive waveform or a known signal, which is not an analog optical waveform.

Specifically, the I-ch DC bias signal from the I-ch control signal generation unit 304A, the Q-ch DC bias signal from the Q-ch control signal generation unit 304A, and the phase DC bias signal from the phase control signal generation unit 304C are optimized. This operation is defined as initial pull-in operation.

In the preliminary optimization of the bias voltages in the initial pull-in state, the same contents of control as those of control of the bias voltages in a basic loop to be described below are performed.

After the initial pull-in operation, each of the I-ch, Q-ch, and phase bias voltages is held to a preliminary optimized value, and the state transitions to an arbitrary electric waveform input state.

In the arbitrary electric waveform input state, a desired arbitrary electric waveform is input to the MZ optical modulator 100.

After the arbitrary electric waveform is input to the MZ optical modulator 100, the state transitions to an error signal polarity specification state.

In the error signal polarity specification state, the error signal polarity selection unit 208 roughly recognizes an average modulation degree of the arbitrary electric waveform.

In the case where the average modulation degree is 50% or more, the polarity selection signal specifying not to invert the polarity is output from the error signal polarity selection unit 208 to the I-ch error signal generation unit 303A and the Q-ch error signal generation unit 303B so that the polarity is not inverted with respect to the error signal. In this way, the polarities of the I-ch error signal e_I and the Q-ch error signal e_Q are not inverted, to thereby direct the bias toward the Null point normally.

On the other hand, in the case where the average modulation degree is less than 50%, the polarity selection signal of specifying to invert the polarity is output from the error signal polarity selection unit 208 to the I-ch error signal generation unit 303A and the Q-ch error signal generation unit 303B so that the polarity is inverted with respect to the error signal. In this way, the polarities of the I-ch error signal e_I and the Q-ch error signal e_Q are inverted, to thereby direct the bias toward the Null point normally.

After the polarities of the error signals are normalized, the state transitions to the basic loop (operational control state) .

In the basic loop, the I-ch, Q-ch, and phase bias voltages are controlled in order.

In the control steps for the I-ch and Q-ch bias voltages, the dither is superimposed on only the I-ch bias terminal and only the Q-ch bias terminal, respectively. In the control step for the phase bias voltage, the dither having different frequencies is superimposed on the I-ch and Q-ch bias terminals simultaneously.

Note that, the dither frequency of the I-ch dither signal and the dither frequency of the Q-ch dither signal have an integral multiple relationship (for example, the dither frequency of the I-ch dither signal is twice the dither frequency of the Q-ch dither signal).

In the basic loop, when there is a request to change the characteristics of the arbitrary optical waveform, the state transitions to the arbitrary electric signal input state again.

As described above, according to the first embodiment, in the optical transmitter for generating an arbitrary optical waveform, the bias control means for performing bias control on the optical modulator performs the bias control on the optical modulator based on the intensity of output light of the optical modulator detected by the light intensity detection means and the average modulation degree of the data sequence calculated by the average modulation degree calculation means.

It is therefore possible to obtain an optical transmitter for generating an arbitrary optical waveform including analog optical waveform such as an OFDM signal, a multilevel modulated signal, and a pre-equalization signal, which is capable of controlling the bias to the Null point easily and is therefore intended for an application that changes a drive waveform of the optical modulator dynamically.

Second Embodiment

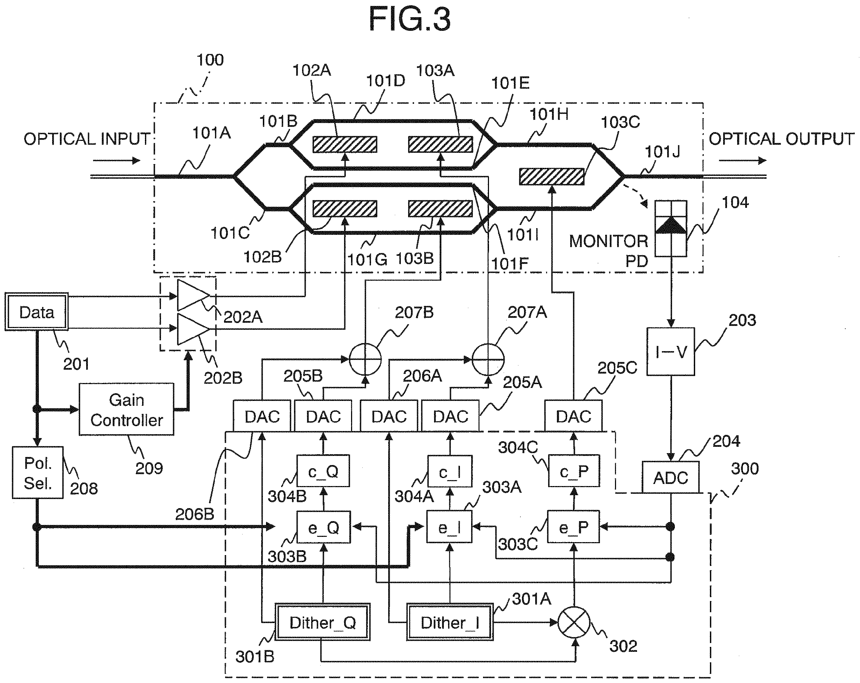

FIG. 3 is a block diagram illustrating an optical transmitter according to a second embodiment of the present invention.

Referring to FIG. 3, in addition to the optical transmitter of FIG. 1, the optical transmitter includes a driver gain controller 209 (average modulation degree calculation means, modulation degree control means). Note that, the other components are the same as those of FIG. 1, and descriptions thereof are therefore omitted.

Hereinafter, the functions of the respective units of the optical transmitter are described. Note that, descriptions of the same functions as those of the first embodiment are omitted.

The data signal generation unit 201 generates a data signal indicating an arbitrary data sequence, in the form of an electric signal. Note that, the data signal to be generated is not limited to a binary signal, and may be an analog electric waveform such as an OFDM signal, a multilevel modulated signal, and a pre-equalization signal.

The data signal generation unit 201 outputs an I-ch component of the generated data signal to the I-ch modulator driver 202A and a Q-ch component thereof to the Q-ch modulator driver 202B, and outputs information on the generated data signal to the error signal polarity selection unit 208 and the driver gain controller 209.

First, the driver gain controller 209 roughly recognizes an average modulation degree of the data signal based on the information on the data signal from the data signal generation unit 201. Then, in accordance with the recognized average modulation degree, the driver gain controller 209 generates a gain control signal for controlling the amplification gain of the I-ch modulator driver 202A and the Q-ch modulator driver 202B, and outputs the gain control signal to the I-ch modulator driver 202A and the Q-ch modulator driver 202B.

In this case, it is conceivable to control the amplification gain of the drivers so that the average modulation degree becomes sufficiently smaller than 50%, for example, about 30%.

The I-ch modulator driver 202A amplifies an I-ch data signal from the data signal generation unit 201 in accordance with the amplification gain determined by the gain control signal from the driver gain controller 209, and outputs the amplified I-ch data signal to the I-ch data modulation electrode 102A.

The Q-ch modulator driver 202B amplifies a Q-ch data signal from the data signal generation unit 201 in accordance with the amplification gain determined by the gain control signal from the driver gain controller 209, and outputs the amplified Q-ch data signal to the Q-ch data modulation electrode 102B.

In this case, the driver gain controller 209 changes the polarity of the amplification gain of the drivers in accordance with the average modulation degree. It is actually conceivable to provide a table, for example, instead of recognizing the average modulation degrees sequentially.

For example, in the case of bias control on a pre-equalization signal, the relationship between the pre-equalization amount and the average modulation degree is a monotonic function. Thus, in this case, the relationship between the pre-equalization amount and tuning terminals of the I-ch modulator driver 202A and the Q-ch modulator driver 202B may be stored in a table.

Note that, the error signal polarity selection unit 208 and the driver gain controller 209 may be integrated together.

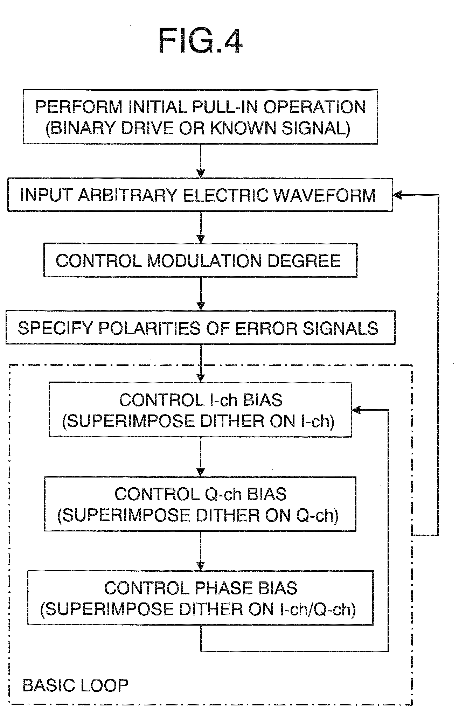

Next, referring to a sequence chart of FIG. 4, processing of generating an arbitrary optical waveform in the optical transmitter according to the second embodiment of the present invention is described. Note that, a description of the same processing as in the first embodiment is omitted.

First, after the arbitrary electric waveform is input to the MZ optical modulator 100, the state transitions to a modulation degree control state.

In the modulation degree control state, the driver gain controller 209 roughly recognizes an average modulation degree of the arbitrary electric waveform.

In this case, the gain control signal for controlling the amplification gain is output from the driver gain controller 209 to the I-ch modulator driver 202A and the Q-ch modulator driver 202B so that the average modulation degree becomes sufficiently smaller than 50%, for example, about 30%.

After the control of the amplification gain of the drivers, the state transitions to an error signal polarity specification state.

As described above, according to the second embodiment, the modulation degree control means controls the amplification gain of the drivers for amplifying the data sequence to be output to the data modulation electrode of the optical modulator based on the average modulation degree of the data sequence calculated by the average modulation degree calculation means, to thereby control the average modulation degree.

It is therefore possible to obtain an optical transmitter for generating an arbitrary optical waveform including analog optical waveform such as an OFDM signal, a multilevel modulated signal, and a pre-equalization signal, which is capable of controlling the bias to the Null point easily and is therefore intended for an application that changes a drive waveform of the optical modulator dynamically.

Note that, in the above-mentioned first and second embodiments, the MZ optical modulator 100 is supposed to be a dual-parallel MZ optical modulator and be a single-electrode, zero-chirp optical modulator incorporating the monitor PD 104.

However, the present invention is not limited thereto, and is applicable to an optical modulator which includes electrodes in both the light guide path 101D and the light guide path 101E, in both the light guide path 101F and the light guide path 101G, and in both the light guide path 101H and the light guide path 1011, and realizes zero-chirp by push-pull driving.

Further, the present invention is applicable to a single MZ optical modulator by eliminating the Q-ch control portion and the phase control portion.

Still further, the present invention is applicable to a polarization multiplexing dual-parallel MZ modulator by additionally providing an I-ch control portion, a Q-ch control portion, and a phase control portion for an orthogonal polarization component.

Still further, regarding an optical modulator incorporating no monitor PD 104, it is necessary to insert an optical coupler for splitting light at the output end of the modulator and is also necessary to attach an external monitor PD.

Still further, in the above-mentioned first and second embodiments, it is necessary that the DC bias signal can be controlled by a level conversion circuit (not shown) in the range that can cover bias shift standards in an end-of-life modulator.

Note that, in the case of using a dual-drive optical modulator to drive a DC bias signal with a single phase in order to simplify the circuit configuration, the optical phase difference at the time of combining an I-ch optical signal and a Q-ch optical signal is changed during the adjustment of the I-ch and Q-ch DC biases. This may adversely affect the bias control unless otherwise modified.

Therefore, in the case of single-phase driving of a DC bias signal, the optical phase shift that occurs during the adjustment of the I-ch and Q-ch DC biases is corrected appropriately by adjustment of a phase terminal, which makes it possible to perform control equivalent to differential driving.

Further, a series of controls exemplified in the above-mentioned first and second embodiments can be performed easily with the use of a microcontroller.

In this case, the dither frequency of the dither signal may be set to several tens to several hundreds Hz, for example.

In the bias control method disclosed in Non Patent Literature 1, it is considered that the difficulty in circuit configuration is higher because one of output signals of drivers is used for control, that is, because a high-speed RF main signal is used for control. In the present invention, on the other hand, only a low frequency signal is used for the bias control without using an RF main signal, and hence the circuit configuration can be simplified.

Further, in the above-mentioned first and second embodiments, it is desired that an arbitrary electric waveform for driving the optical modulator on the order of 10 to 100 msec have a histogram symmetric about the average level.

Still further, in order to adapt to the secular change of an optimum point of the bias voltage of the optical modulator, it is desired to control an initial lock point of the bias to be closest to 0 V.

Reference Signs List

100 MZ optical modulator, 101A to 1011 light guide path, 102A I-ch data modulation electrode, 102B Q-ch data modulation electrode, 103A I-ch bias electrode, 103B Q-ch bias electrode, 103C phase bias electrode, 201 data signal generation unit, 202A I-ch modulator driver, 202B Q-ch modulator driver, 203 current-to-voltage conversion unit, 204 ADC, 205A I-ch DC DAC, 205B Q-ch DC DAC, 205C phase DC DAC, 206A I-ch dither DAC, 206B Q-ch dither DAC, 207A I-ch DC dither adder, 207B Q-ch DC dither adder, 208 error signal polarity selection unit, 209 driver gain controller, 300 bias controller, 301A I-ch dither signal generation unit, 301B Q-ch dither signal generation unit, 302 dither signal multiplication unit, 303A I-ch error signal generation unit, 303B Q-ch error signal generation unit, 303C phase error signal generation unit, 304A I-ch control signal generation unit, 304B Q-ch control signal generation unit, 304Cphase control signal generation unit.

**Claims**

1. An optical transmitter arranged for modulating light from a light source by an optical modulator (100) with use of an arbitrary data sequence being an electric signal,
   the optical transmitter comprising:

   light intensity detection means (104) arranged for detecting intensity of output light of the optical modulator (100); data signal generation means (201) arranged for generating the arbitrary data sequence; characterized that the optical transmitter is adapted for modulating light from a light source by the optical modulator (100) with use of the arbitrary data sequence, to thereby generate an arbitrary optical waveform, wherein the optical transmitter further comprises:

   average modulation degree calculation means (208) arranged for calculating an average modulation degree of the arbitrary data sequence based on the arbitrary data sequence; and
   bias control means (300) arranged for performing bias control on the optical modulator (100) based on the intensity of the output light detected by the light intensity detection means (104) and the average modulation degree of the arbitrary data sequence calculated by the average modulation degree calculation means (208).

2. An optical transmitter according to claim 1, further comprising modulation degree control means (209) arranged for controlling, based on the average modulation degree of the arbitrary data sequence calculated by the average modulation degree calculation means (208), an amplification gain of a driver (202) arranged for amplifying the arbitrary data sequence to be output to a data modulation electrode (102) of the optical modulator (100), to thereby control the average modulation degree.

3. An optical transmitter according to claim 1 or 2,
   wherein the optical modulator (100) comprises a dual-parallel MZ optical modulator,
   wherein, when one channel of the dual-parallel MZ optical modulator is represented by I-ch, another channel is represented by Q-ch, and an optical phase adjustment unit is represented by phase, the bias control means (300) is configured to:

   superimpose dither, which is a minute and rectangular known signal having two alternate positive and negative polarities, on only an I-ch bias terminal when I-ch bias control is performed;
   superimpose the dither on only a Q-ch bias terminal when Q-ch bias control is performed; and
   superimpose the dither having different frequencies simultaneously on the I-ch bias terminal and the Q-ch bias terminal when phase bias control is performed, and

wherein the bias control means (300) performs the bias control by generating an I-ch control signal, a Q-chcontrol signal, and a phase control signal based on an I-ch error signal e_I of e_I$\propto$I (p,0)-I(n,0), a Q-ch error signal e_Q of e_Q$\propto$I(0,p)-I(0,n), and a phase error signal e_Pof e_P$\propto$I(p,p)-I(p,n)-{I(n,p)-I(n,n) }, where I(a,b) represents a current output from the light intensity detection means (104), a represents the I-ch dither, b represents the Q-ch dither, p represents that the dither is on a positive polarity side, n represents that the dither is on a negative polarity side, and 0 represents that no dither is superimposed.

4. An optical transmitter according to claim 3, wherein, in order to generate the arbitrary optical waveform:

the bias control means (300) is arranged to perform initial pull-in processing of controlling the bias control according to claim 3 in a state in which a binary drive waveform or a known signal is input to the optical modulator (100);
the data signal generation means (201) is arranged to perform after the initial pull-in processing, arbitrary electric waveform input processing of inputting a desired arbitrary electric waveform to the optical modulator (100);
the average modulation degree calculation means (208) is arranged to roughly recognize, after the arbitrary electric waveform input processing, an average modulation degree of the arbitrary electric waveform, and performs error signal polarity specification processing of specifying whether or not to invert a polarity of the error signal for the bias control in accordance with the average modulation degree;
the bias control means (300) is arranged to perform, after the error signal polarity specification processing, operational control processing of performing the bias control according to claim 3; and
the data signal generation means (201) is arranged to perform the arbitrary electric waveform input processing again when there is a request to change characteristics of the arbitrary optical waveform in the operational control processing.

5. An optical transmitter according to claim 4, wherein the modulation degree control means (209) is arranged to roughly recognize, after the arbitrary electric waveform input processing, the average modulation degree of the arbitrary electric waveform, and is arranged to perform modulation degree control processing of controlling an amplification gain of a driver (202) for amplifying the arbitrary data sequence to be output to a data modulation electrode (102) of the optical modulator (100) in accordance with the average modulation degree.

**Patentansprüche**

1. Optischer Sender, dafür angeordnet, Licht von einer Lichtquelle mittels eines optischen Modulators (100) und unter Verwendung einer beliebigen Datensequenz zu modulieren, die ein elektrisches Signal ist, wobei der optische Sender Folgendes umfasst:

Lichtintensitäts-Erkennungsmittel (104), die dafür angeordnet sind, die Intensität von Ausgangslicht des optischen Modulators (100) zu erkennen,
Datensignal-Erzeugungsmittel (201), die dafür angeordnet sind, die beliebige Datensequenz zu erzeugen, **dadurch gekennzeichnet, dass** der optische Sender zum Modulieren von Licht von einer Lichtquelle mittels des optischen Modulators (100) und unter Verwendung der beliebigen Datensequenz eingerichtet ist, um dadurch eine beliebige optische Wellenform zu erzeugen, wobei der optische Sender ferner Folgendes umfasst:

Mittel (208) zum Berechnen des durchschnittlichen Modulationsgrades, die dafür angeordnet sind, basierend auf der beliebigen Datensequenz einen durchschnittlichen Modulationsgrad der beliebigen Datensequenz zu berechnen, und
Vorspannungssteuermittel (300), die dafür angeordnet sind, basierend auf der Intensität des von den Lichtintensitäts-Erkennungsmitteln (104) erkannten Ausgangslichts und auf dem durchschnittlichen Modulationsgrad der beliebigen Datensequenz, der von den Mitteln (208) zum Berechnen des durchschnittlichen Modulationsgrades berechnet wurde, den optischen Modulator (100) zu steuern.

2. Optischer Sender nach Anspruch 1, ferner Modulationsgrad-Steuermittel (209) umfassend, die dafür angeordnet sind, basierend auf dem durchschnittlichen Modulationsgrad der beliebigen Datensequenz, der von den Mitteln (208) zum Berechnen des durchschnittlichen Modulationsgrades berechnet wurde, eine Verstärkung einer Ansteuerung (202) zu steuern, die dafür angeordnet ist, die beliebige Datensequenz zu verstärken, die an eine Datenmodulationselektrode (102) des optischen Modulators (100) auszugeben ist, um dadurch den durchschnittlichen Modulationsgrad zu steuern.

3. Optischer Sender nach Anspruch 1 oder 2, wobei der optische Modulator (100) einen optischen Dual-Parallel-MZ-Modulator umfasst,
wobei, wenn ein Kanal des optischen Dual-Parallel-MZ-Modulators durch I-ch dargestellt ist, ein weiterer Kanal durch Q-ch dargestellt ist und eine optische Phaseneinstellungseinheit durch Phase dargestellt ist, wobei das Vorspannungssteuermittel (300) für Folgendes konfiguriert ist:

Überlagern einer Schwingung, die ein exaktes und bekanntes Rechtecksignal mit zwei abwechselnd positiven und negativen Polaritäten ist, nur auf einen I-ch-Vorspannungsanschluss, wenn eine I-ch-Vorspannungssteuerung ausgeführt wird,
Überlagern der Schwingung nur auf einen Q-ch-Vorspannungsanschluss, wenn eine Q-ch-Vorspannungssteuerung ausgeführt wird, und
Überlagern der Schwingung, die gleichzeitig verschiedene Frequenzen aufweist, auf den I-ch-Anschluss und den Q-ch-Anschluss, wenn eine Phasenvorspannungssteuerung ausgeführt wird, und
wobei das Vorspannungssteuermittel (300) die Vorspannungssteuerung durch Erzeugen eines I-ch-Steuerkanals, eines Q-ch-Steuersignals und eines Phasensteuersignals ausführt, basierend auf einem I-ch-Fehlersignal $e\_I$ von $e-I \propto I(p,0)-I(0,n)$, einem Q-ch- Fehlersignal $e\_Q$ von $e\_Q \propto I(0,p)-I(0,n)$ und einem Phasenfehlersignal $e\_P$ von $e\_P \propto I(p,p)-I(p,n)-\{I(n,p)-I(n,n)\}$, wobei $I(a,b)$ einen Stromausgang aus dem Lichtintensitäts-Erkennungsmittel (104) darstellt, a die I-ch-Überlagerungsschwingung darstellt, b die Q-ch-Überlagerungsschwingung darstellt, p darstellt, dass die Überlagerungsschwingung auf der Seite einer positiven Polarität liegt, n darstellt, dass die Überlagerungsschwingung auf der Seite einer negativen Polarität liegt, und 0 darstellt, dass keine Schwingung überlagert ist.

4. Optischer Sender nach Anspruch 3, wobei, um die beliebige optische Wellenform zu erzeugen:

das Vorspannungssteuermittel (300) dafür angeordnet ist, eine anfängliche Pull-in-Verarbeitung des Steuerns der Vorspannungssteuerung nach Anspruch 3 auszuführen, in einem Zustand, in dem eine binäre Ansteuerungswellenform oder ein bekanntes Signal in den optischen Modulator (100) eingegeben wird,
das Datensignal-Erzeugungsmittel (201) dafür angeordnet ist, nach der anfänglichen Pull-in-Verarbeitung eine Eingabeverarbeitung einer beliebigen elektrischen Wellenform des Eingebens einer gewünschten beliebigen elektrischen Wellenform in den optischen Modulator (100) auszuführen,
das Mittel (208) zum Berechnen des durchschnittlichen Modulationsgrades dafür angeordnet ist, nach der Eingabeverarbeitung der beliebigen elektrischen Wellenform einen durchschnittlichen Modulationsgrad der beliebigen elektrischen Wellenform grob zu erkennen und eine Fehlersignal-Polaritätsspezifikationsverarbeitung des Spezifizierens auszuführen, ob eine Polarität des Fehlersignals für die Vorspannungssteuerung gemäß dem durchschnittlichen Modulationsgrad umzukehren ist oder nicht,
das Vorspannungssteuermittel (300) dafür angeordnet ist, nach der Fehlersignal-Polaritätsspezifikationsverarbeitung eine Betriebssteuerungsverarbeitung des Ausführens der Vorspannungssteuerung nach Anspruch 3 auszuführen, und
das Datensignal-Erzeugungsmittel (201) dafür angeordnet ist, die Eingabeverarbeitung der beliebigen elektrischen Wellenform erneut auszuführen, wenn erbeten wird, die Eigenschaften der beliebigen optischen Wellenform in der Betriebssteuerungsverarbeitung zu ändern.

5. Optischer Sender nach Anspruch 4, wobei das Modulationsgrad-Steuermittel (209) dafür angeordnet ist, nach der Eingabeverarbeitung der beliebigen elektrischen Wellenform den durchschnittlichen Modulationsgrad der beliebigen elektrischen Wellenform grob zu erkennen, und dafür angeordnet ist, die Modulationsgrad-Steuerungsverarbeitung des Steuerns einer Verstärkung einer Ansteuerung (202) zum Verstärken der beliebigen Datensequenz, die an eine Datenmodulationselektrode (102) des optischen Modulators (100) auszugeben ist, gemäß dem durchschnittlichen Modulationsgrad auszuführen.

**Revendications**

1. Emetteur optique agencé pour moduler la lumière provenant d'une source de lumière par un modulateur optique (100) en utilisant une séquence de données arbitraire qui est un signal électrique,
l'émetteur optique comprenant :

des moyens de détection d'intensité de lumière (104) agencés pour détecter l'intensité de la lumière de sortie du modulateur optique (100) ;
des moyens de génération de signal de données (201) agencés pour générer la séquence de données arbitraire ; **caractérisé en ce que** l'émetteur optique est conçu pour moduler la lumière provenant d'une source de lumière par le modulateur optique (100) en utilisant la séquence de données arbitraire, pour de ce fait générer une forme d'onde optique arbitraire, dans lequel l'émetteur optique comprend en outre :

des moyens de calcul de degré de modulation moyen (208) agencés pour calculer un degré de modulation moyen de la séquence de données arbitraire sur la base de la séquence de données arbitraire ; et
des moyens de commande de polarisation (300) agencés pour effectuer une commande de polarisation sur le modulateur optique (100) sur la base de l'intensité de la lumière de sortie détectée par les moyens de détection d'intensité de lumière (104) et du degré de modulation moyen de la séquence de données arbitraire calculé par les moyens de calcul de degré de modulation moyen (208).

2. Emetteur optique selon la revendication 1, comprenant en outre des moyens de commande de degré de modulation (209) agencés pour commander, sur la base du degré de modulation moyen de la séquence de données arbitraire calculé par les moyens de calcul de degré de modulation moyen (208), un gain d'amplification d'un dispositif de commande (202) agencé pour amplifier la séquence de données arbitraire à délivrer à une électrode de modulation de données (102) du modulateur optique (100), pour de ce fait commander le degré de modulation moyen.

3. Emetteur optique selon la revendication 1 ou 2,
dans lequel le modulateur optique (100) comprend un modulateur optique MZ parallèle double,
dans lequel, lorsqu'un canal du modulateur optique MZ parallèle double est représenté par I-ch, qu'un autre canal est représenté par Q-ch, et qu'une unité d'ajustement de phase optique est représentée par une phase, les moyens de commande de polarisation (300) sont configurés pour :

superposer un signal de superposition, qui est un signal connu minuscule et rectangulaire ayant deux polarités positive et négative alternées, uniquement sur une borne de polarisation d'I-ch lorsqu'une commande de polarisation d'I-ch est effectuée ;
superposer le signal de superposition uniquement sur une borne de polarisation de Q-ch lorsqu'une commande de polarisation de Q-ch est effectuée ; et
superposer le signal de superposition ayant différentes fréquences simultanément sur la borne de polarisation d'I-ch et la borne de polarisation de Q-ch lorsqu'une commande de polarisation de phase est effectuée, et
dans lequel les moyens de commande de polarisation (300) effectuent la commande de polarisation en générant un signal de commande d'I-ch, un signal de commande de Q-ch, et un signal de commande de phase sur la base d'un signal d'erreur d'I-ch $e\_I$ de $e\_I \propto I(p,0)-I(n,0)$, d'un signal d'erreur de Q-ch $e\_Q$ de e Q$\propto I(0,p)-I(0,n)$, et d'un signal d'erreur de phase $e\_P$ de $e\_P \propto I(p,p)-I(p,n)-\{I(n,p)-I(n,n)\}$, où $I(a,b)$ représente une sortie de courant provenant des moyens de détection d'intensité de lumière (104), a représente le signal de superposition d'I-ch, b représente le signal de superposition de Q-ch, p indique que le signal de superposition est d'un côté de polarité positive, n indique que le signal de superposition est d'un côté de polarité négative, et 0 indique qu'aucun signal de superposition n'est superposé.

4. Emetteur optique selon la revendication 3, dans lequel, afin de générer la forme d'onde optique arbitraire :

les moyens de commande de polarisation (300) sont agencés pour effectuer un traitement de tirage initial pour commander la commande de polarisation selon la revendication 3 dans un état dans lequel une forme d'onde de commande binaire ou un signal connu est appliqué au modulateur optique (100) ;
les moyens de génération de signal de données (201) sont agencés pour effectuer, après le traitement de tirage initial, un traitement d'entrée de forme d'onde électrique arbitraire pour appliquer une forme d'onde électrique arbitraire souhaitée au modulateur optique (100) ;
les moyens de calcul de degré de modulation moyen (208) sont agencés pour reconnaître approximativement, après le traitement d'entrée de forme d'onde électrique arbitraire, un degré de modulation moyen de la forme d'onde électrique arbitraire, et effectuent un traitement de spécification de polarité de signal d'erreur pour spécifier s'il convient ou non d'inverser une polarité du signal d'erreur pour la commande de polarisation conformément au degré de modulation moyen ;
les moyens de commande de polarisation (300) sont agencés pour effectuer, après le traitement de spécification de polarité de signal d'erreur, un traitement de commande de fonctionnement pour effectuer la commande de polarisation selon la revendication 3 ; et

les moyens de génération de signal de données (201) sont agencés pour effectuer le traitement d'entrée de forme d'onde électrique arbitraire de nouveau lorsqu'il y a une demande pour changer les caractéristiques de la forme d'onde optique arbitraire dans le traitement de commande de fonctionnement.

5. Emetteur optique selon la revendication 4, dans lequel les moyens de commande de degré de modulation (209) sont agencés pour reconnaître approximativement, après le traitement d'entrée de forme d'onde électrique arbitraire, le degré de modulation moyen de la forme d'onde électrique arbitraire, et sont agencés pour effectuer un traitement de commande de degré de modulation pour commander un gain d'amplification d'un dispositif de commande (202) pour amplifier la séquence de données arbitraire à délivrer à une électrode de modulation de données (102) du modulateur optique (100) conformément au degré de modulation moyen.

# FIG.1

EP 2 541 806 B1

# FIG.2

PERFORM INITIAL PULL-IN OPERATION
(BINARY DRIVE OR KNOWN SIGNAL)

INPUT ARBITRARY ELECTRIC WAVEFORM

SPECIFY POLARITIES OF ERROR SIGNALS

CONTROL I-ch BIAS
(SUPERIMPOSE DITHER ON I-ch)

CONTROL Q-ch BIAS
(SUPERIMPOSE DITHER ON Q-ch)

CONTROL PHASE BIAS
(SUPERIMPOSE DITHER ON I-ch/Q-ch)

BASIC LOOP

# FIG.3

EP 2 541 806 B1

# FIG.4

```
┌─────────────────────────────────────┐
│   PERFORM INITIAL PULL-IN OPERATION  │
│    (BINARY DRIVE OR KNOWN SIGNAL)    │
└─────────────────────────────────────┘
                   │
                   ▼
┌─────────────────────────────────────┐
│    INPUT ARBITRARY ELECTRIC WAVEFORM │◄──┐
└─────────────────────────────────────┘   │
                   │                       │
                   ▼                       │
     ┌───────────────────────────────┐     │
     │   CONTROL MODULATION DEGREE    │     │
     └───────────────────────────────┘     │
                   │                       │
                   ▼                       │
┌─────────────────────────────────────┐    │
│   SPECIFY POLARITIES OF ERROR SIGNALS│    │
└─────────────────────────────────────┘    │
```

CONTROL I-ch BIAS
(SUPERIMPOSE DITHER ON I-ch)

CONTROL Q-ch BIAS
(SUPERIMPOSE DITHER ON Q-ch)

CONTROL PHASE BIAS
(SUPERIMPOSE DITHER ON I-ch/Q-ch)

BASIC LOOP

# FIG.5

EXTINCTION CHARACTERISTICS OF
MZ OPTICAL MODULATOR

# FIG.6

EXTINCTION CHARACTERISTICS OF MZ
OPTICAL MODULATOR

HISTOGRAM OF DRIVE SIGNAL OF MODULATOR

# FIG.7

RELATIONSHIP BETWEEN BIAS VOLTAGE ERROR
AND AVERAGE OPTICAL OUTPUT LEVEL
(MODULATION DEGREE=100%)

# FIG.8

RELATIONSHIP BETWEEN BIAS VOLTAGE ERROR
AND OUTPUT LIGHT LEVEL CHANGE
(MODULATION DEGREE=100%)

# FIG.9

EXTINCTION CHARACTERISTICS OF
MZ OPTICAL MODULATOR

HISTOGRAM OF DRIVE SIGNAL OF MODULATOR

# FIG.10

EXTINCTION CHARACTERISTICS OF
MZ OPTICAL MODULATOR

HISTOGRAM OF DRIVE SIGNAL OF MODULATOR

# FIG.11

RELATIONSHIP BETWEEN BIAS VOLTAGE ERROR
AND OUTPUT LIGHT LEVEL CHANGE
(MODULATION DEGREE=50%)

# FIG.12

RELATIONSHIP BETWEEN BIAS VOLTAGE ERROR
AND OUTPUT LIGHT LEVEL CHANGE
(MODULATION DEGREE<50%)

**EP 2 541 806 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009232517 A1
- JP 5142504 A
- JP 2008092172 A
- JP 2007171548 A
- JP 2008236512 A

**Non-patent literature cited in the description**

- **YUICHI AKIYAMA et al.** A study of bias control method for RZ-DQPSK modulator. *Technical Report of IEICE,* 2008, 167-170